# EUROPÄISCHE PATENTSCHRIFT

(11) **EP 2 035 212 B1**
(45) Veröffentlichungstag und Bekanntmachung des Hinweises auf die Patenterteilung: **20.11.2013**
(21) Anmeldenummer: 07710516.1
(22) Anmeldetag: 15.03.2007
(51) Int. Cl.: B29C 65/48, B29C 65/50

(54) **VERBINDUNG ZWISCHEN FLÄCHIGEN TEILEN**
CONNECTION BETWEEN LAMINAR PARTS
LIAISON ENTRE DEUX PARTIES PLATES

(30) Priorität: 03.07.2006 AT 51506 U
(43) Veröffentlichungstag der Anmeldung: 18.03.2009
(73) Patentinhaber: Roiser, Thomas, 5310 Mondsee (AT)
(72) Erfinder: Roiser, Thomas, 5310 Mondsee (AT)
(74) Vertreter: Beer & Partner Patentanwälte KG
(86) Internationale Anmeldenummer: PCT/AT2007/000126
(87) Internationale Veröffentlichungsnummer: WO 2008/003102

(56) Entgegenhaltungen:
- EP-A1- 1 504 686
- WO-A-2004/069649
- DE-C1- 4 310 453
- FR-A- 1 340 393
- GB-A- 2 028 664
- US-A- 3 526 554
- US-A- 4 726 867
- US-A- 4 931 335

## Beschreibung

Die Erfindung betrifft ein Verfahren zum Herstellen einer Verbindung für zwei flächige Teile, wobei die flächigen Teile stumpf mit wenigstens einer ihrer randseitigen Schmalflächen aneinander angelegt werden, wobei die Teile wenigstens zwei Lagen aufweisen und wobei eine Lage eine Gewebelage ist. Zudem betrifft die Erfindung eine Verbindung für zwei flächige Teile, die stumpf mit wenigstens einer ihrer randseitigen Schmalflächen aneinander anliegen, wobei die Teile wenigstens zwei Lagen aufweisen und wobei eine Lage eine Gewebelage ist.

Gattungsgemäße Verbindungen sind unter anderem aus der EP 1 504 686 A1, der DE 43 10 453 C1, der FR 1 340 393 A, der US 4,931,335 A und der US 4,726,867 A bekannt.

Eine solche Verbindung kann beispielsweise bei Bekleidungsstücken aus elastischem Schaumstoff verwendet werden.

Solche Bekleidungsstücke können sein Anzüge, Handschuhe, Schutzhauben, Schuhe, Füßlinge und ähnliches. Insbesondere in Betracht gezogen sind Bekleidungsstücke, die bei Benützung Nässe ausgesetzt sind, wie Bekleidungsstücke für Taucher, Radfahrer, Motorradfahrer, Skifahrer, Wasserskifahrer, Surfer.

Bislang sind Teile von Bekleidungsstücken, die aus elastischem, flächigen Werkstoff, insbesondere aus elastischen Schaumstoffen bestehen (Neopren-Anzüge), in aufwändiger Weise durch besonders ausgebildete Nähte miteinander verbunden worden, um das Kleidungsstück herzustellen. Ein Nachteil der bekannten Nähte ist, dass sie einerseits nicht wasserdicht sind und anderseits eine nicht hinreichende Elastizität besitzen. Hinzu kommt noch, dass die Nähte, weil sie dick auftragen, eine Unterbrechung des Kleidungsstückes darstellen und, insbesondere wenn es sich um eng an den Körper anliegende Bekleidungsstücke handelt (Handschuhe und Schutzhauben), am Körper des Trägers des Bekleidungsstückes Druckstellen hervorrufen, also unangenehm zu tragen sind.

Der Erfindung liegt die Aufgabe zu Grunde, eine Verbindung zwischen flächigen Teilen der eingangs genannten Gattung zur Verfügung zu stellen, welche die geschilderten Nachteile nicht aufweist, insbesondere angenehm zu tragen ist.

Gelöst wird diese Aufgabe mit einem Verfahren, welches die Merkmale des Anspruches 1 aufweist.

Zudem wird diese Aufgabe mit einer Verbindung gelöst, welche die Merkmale des Anspruches 2 aufweist.

Bevorzugte und vorteilhafte Ausgestaltungen der Erfindung sind Gegenstand der Unteransprüche.

Erfindungsgemäß ist vorgesehen, dass die flächigen Teile in dem Bereich ihrer Schmalflächen, in dem die Teile aneinander grenzen, durch Kleben miteinander verbunden werden, und dass danach ein auf wenigstens einer Großfläche der Teile durchgehend aufliegender und die miteinander verbundenen Ränder der Teile überdeckender Abdeckstreifen aufgebracht und mit der Gewebelage verklebt oder verschweißt wird.

Da bei der Erfindung im Bereich der Verbindung der beiden flächigen Teile keine Naht in klassischem Sinn, also eine Naht mit Hilfe von Fäden und dgl., vorliegt, ist der Tragekomfort verbessert und die Naht ist elastisch, da keine die Elastizität der miteinander verbundenen Teile behindernden Elemente vorliegen.

In einer Ausführungsform ist die Verbindung so ausgebildet, dass die beiden Teile aus flächigem Werkstoff, insbesondere gummielastischen Schaumwerkstoff (beispielsweise Neopren), wenigstens nur über einen Teil ihrer aneinander angrenzenden Schmalflächen miteinander verbunden sind. Diese Verbindung kann durch Verkleben, Verschweißen oder eine Kombination der beiden Maßnahmen erfolgen. Insbesondere geeignet sind wärmeaktivlerbare Klebstoffe.

In einer Weiterbildung der Erfindung ist vorgesehen, dass im Bereich der so gebildeten Stoßstelle, an welcher die beiden Teile des flächigen Werkstoffes miteinander verbunden sind, ein- oder beidseitig ein Abdeckstreifen befestigt wird, welcher die Stoßstelle überdeckt.

In einer Ausführungsform ist vorgesehen, dass der die Stoßstelle überdeckende Abdeckstreifen längselastisch ist.

Bevorzugte Verbindungstechniken des Abdeckstreifens mit dem flächigen Werkstoff sind Klebetechniken, insbesondere das Kleben mit wärmeaktivierbaren Klebern. Auch andere durch Energiezufuhr aktivierbare Kleber (Ultraschall, Infrarot und ähnliche in der Hochfrequenz) sind in Betracht gezogen. Der Abdeckstreifen kann mit den Teilen, deren Stoßstelle überdeckend auch durch Schweißen verbunden sein.

In einer speziellen Ausführungsform der erfindungsgemäßen Verbindung, die insbesondere für Handschuhe in Betracht gezogen ist, aber auch für Schutzhauben angewendet werden kann, werden die Teile aus gummielastischem Kunstschaumstoff miteinander verbunden, indem sie an ihren Schmalflächen über deren gesamte Höhe durchgehend miteinander verbunden sind. An wenigstens einer Seite wird ein Abdeckstreifen aufgebracht, wobei der Abdeckstreifen durch einen wärmeaktivierbaren Kleber mit den beiden Teilen, deren Stoßstelle, in welcher geklebt ist, überdeckend angebracht wird.

Der bei der Erfindung bevorzugt verwendete Abdeckstreifen ist vorzugsweise längenelastisch ausgebildet, sodass die Verbindung zwischen den beiden Teilen des Bekleidungsstückes, insbesondere des Handschuhs oder der Schutzhaube (solche Schutzhauben werden beispielsweise unter Sturzhelmen oder ähnlichem getragen), ebenfalls elastisch ist.

In einer anderen Ausführungsform der erfindungsgemäßen Verbindung sind die beiden Teile mehrschichtig aufgebaut. Die Teile besitzen beispielsweise einen Grundkörper aus Vlies, insbesondere ein Vlies aus Naturwolle, auf diesem Grundkörper aufliegend eine Membran, die wasserdicht aber atmungsaktiv ist, und an der Membran aufliegend ein Gewebe, insbesondere ein Gewebe aus Kunstfaser.

Die beiden Teile werden in einer Ausführungsform der Verbindung gemäß der Erfindung miteinander verbunden, die wie folgt aufgebaut ist.

In der Stoßstelle zwischen den Schmalflächen von Teilen, die wenigstens zwei Lagen aufweisen, wird Kleber bevorzugt ausschließlich im Bereich einer Lage, z.B. der Gewebelage, aufgebracht, erstreckt sich also nur über einen Teil der Höhe der Schmalflächen der beiden Teile. Nachdem die beiden Teile so miteinander verbunden sind, wird, insbesondere auf der Gewebelage aufliegend, ein Abdeckstreifen aufgebracht, indem der Abdeckstreifen angeklebt oder mit dem Gewebe verschweißt wird. Wenn hier eine Klebetechnik angewendet wird, sind durch Energiezufuhr (Wärme und dgl.) aktivierbare Kleber in Betracht gezogen.

Weitere Einzelheiten und Merkmale ergeben sich aus der nachstehenden Beschreibung bevorzugter Ausführungsbeispiele anhand der Zeichnungen.

Es Zeigt:
Fig. 1 eine nicht erfindungsgemäße Verbindung im Querschnitt (nicht maßstäblich),
Fig. 2 eine erfindungsgemäße Ausführungsform ebenfalls im Querschnitt und nicht maßstäblich.

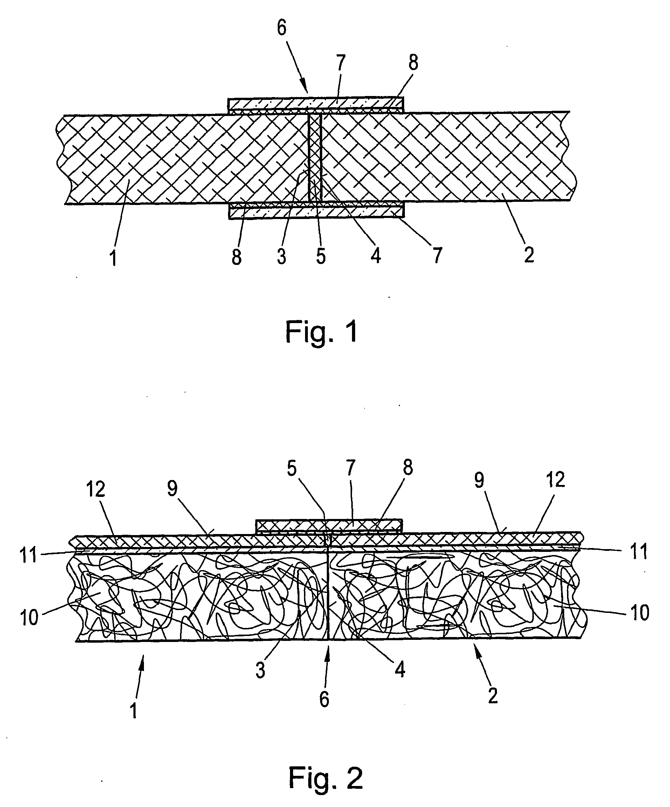

Bei der in Fig. 1 gezeigten Ausführungsform sind zwei Teile 1, 2 aus flächigem Werkstoff, z.B. aus gummielastischem Schaumstoff, insbesondere Neopren-Schaumstoff, mit ihren Schmalflächen 3, 4 nebeneinander liegend angeordnet, und werden mit einer Klebung 5 im Bereich zwischen den Schmalflächen 3, 4 miteinander verbunden. Dabei erstreckt sich die Klebung 5 über die gesamte Höhe (Breite) der Schmalflächen 3, 4 durch, wenngleich auch in Betracht gezogen ist, die Klebung 5 nur in einem Teil der Höhe (Breite) der Schmalflächen 3, 4 vorzusehen und/oder die Klebung über die Länge der Stoßstelle 6 nicht durchgehend, sondern mit Unterbrechungen vorzusehen.

Auf wenigstens einer Seite der so hergestellten, geklebten Stoßstelle 6 zwischen den Teilen 1 und 2 wird ein Abdeckstreifen 7 aufgebracht, wobei vorgesehen ist, dass der Abdeckstreifen 7 mit einer Lage 8 aus wärmeaktivierbarem Kleber versehen ist. Beim Aufbringen des Abdeckstreifens 7 auf die Stoßstelle 6 zwischen den beiden Teilen 1, 2 wird der Kleber der Lage 8 aktiviert und der Abdeckstreifen 7 an die Großflächen 9 der Teile 1, 2 angedrückt. Durch die kombinierte Klebetechnik wird eine elastische Verbindung zwischen den Teilen 1, 2, welche im Wesentlichen der Elastizität der Teile 1, 2 selbst entspricht, erreicht.

Bei der in Fig. 2 gezeigten Ausführungsform sind die beiden Teile 1, 2 mehrlagig aufgebaut und besitzen einen Grundkörper 10 aus Vlies, insbesondere ein Vlies, aus Naturwolle, beispielsweise Merinowolle, darauf eine Schicht 11 aus wasserdichtem, jedoch atmungsaktiven Werkstoff, insbesondere eine Membran, und auf dieser aufliegend eine Lage 12 aus Gewebe, beispielsweise ein Kunstfasergewebe. Die drei genannten Lagen, also Vlieslage 10, Membran 11 und Gewebe 12, sind miteinander verbunden, wie dies im Stand der Technik üblich ist.

Die beiden Teile 1, 2 sind miteinander nur im Bereich der Gewebelage 12 durch einen dort aufgebrachten Kleber 5 verbunden. In Betracht gezogen ist auch ein Verschweißen der Gewebelagen 12 durch Wärmezufuhr, soferne der Werkstoff der Gewebelagen 12 dies zulässt. Auf die so erzeugte Stoßstelle 6, in der die Teile 1, 2 bloß im Bereich der Gewebelagen 12 miteinander verbunden sind, ist ein Abdeckstreifen 7, wie zuvor anhand der Fig. 1 beschrieben, aufgebracht. Wenngleich nicht dargestellt, kann auch bei der Verbindung der Fig. 2 ein zweiter Abdeckstreifen 7 auf der Lage 10 aus Vlies befestigt (angeklebt oder angeschweißt) sein.

Zusammenfassend kann ein Ausführungsbeispiel der Erfindung wie folgt dargestellt werden:

Eine naht- und insbesondere fadenlose Verbindung von zwei Teilen 1, 2 aus flächigem, elastischen Kunstschaumstoff umfasst eine Verklebung 5 im Bereich der Stoßstelle 6 zwischen den Schmalflächen 3, 4 der Teile 1, 2 und auf einer oder beiden Großflächen 9 der Teile 1, 2 angebrachte, insbesondere durch Klebung 8 befestigte, längenelastische Abdeckstreifen 7, welche die Stoßsteile 6 überdecken.

## Patentansprüche

1. Verfahren zum Herstellen einer Verbindung für zwei flächige Teile (1, 2), wobei die flächigen Teile (1, 2) stumpf mit wenigstens einer ihrer randseitigen Schmalflächen (3, 4) aneinander angelegt werden, wobei die Teile (1, 2) wenigstens zwei Lagen aufweisen und wobei eine Lage eine Gewebelage (12) ist, **dadurch gekennzeichnet, dass** die flächigen Teile (1, 2) in dem Bereich ihrer Schmalflächen (3, 4), in dem die Teile (1, 2) aneinander grenzen, durch Kleben miteinander verbunden (5) werden, und dass danach auf wenigstens einer Großfläche (9) der Teile (1, 2) durchgehend aufliegend ein die miteinander verbundenen Ränder der Teile (1, 2) überdeckender Abdeckstreifen (7) aufgebracht und mit der Gewebelage (12) verklebt oder verschweißt wird.

2. Verbindung für zwei flächige Teile (1, 2), die stumpf mit wenigstens einer ihrer randseitigen Schmalflächen (3, 4) aneinander anliegen, wobei die Teile (1, 2) wenigstens zwei Lagen aufweisen, wobei eine Lage eine Gewebelage (12) ist und wobei die flächigen Teile (1, 2) in dem Bereich ihrer Schmalflächen (3, 4), in dem die Teile (1, 2) aneinander grenzen, durch eine Klebenaht miteinander verbunden (5) sind, **dadurch gekennzeichnet, dass** auf wenigstens einer Großfläche (9) der Teile (1, 2) durchgehend aufliegend ein die miteinander verbundenen Ränder der Teile (1, 2) überdeckender Abdeckstreifen (7) aufgebracht ist, der mit der Gewebelage (12) verklebt oder verschweißt ist.

3. Verbindung nach Anspruch 2, **dadurch gekennzeichnet, dass** die Schmalflächen (3, 4) der Teile (1, 2) nur über einen Teil ihrer Flächenerstreckung miteinander verbunden sind.

4. Verbindung nach Anspruch 3, **dadurch gekennzeichnet, dass** die Schmalflächen (3, 4) der Teile (1, 2) miteinander in mehreren voneinander getrennten, über die Länge der miteinander verbundenen Schmalflächen (3, 4) der Teile (1, 2) verteilten Bereichen miteinander verbunden sind.

5. Verbindung nach Anspruch 3 oder 4, **dadurch gekennzeichnet, dass** die Schmalflächen (3, 4) der Teile (1, 2) miteinander in wenigstens einem Bereich verbunden sind, der sich nur über einen Bruchteil der Höhe und der Breite der Schmalflächen (3, 4) erstreckt.

6. Verbindung nach einem der Ansprüche 2 bis 5, **dadurch gekennzeichnet, dass** der Abdeckstreifen (7) mit der Großfläche (9) beider Teile (1, 2) verklebt (8) ist.

7. Verbindung nach einem der Ansprüche 2 bis 5, **dadurch gekennzeichnet, dass** der Abdeckstreifen (7) mit der Großfläche (9) beider Teile (1, 2) verschweißt ist.

8. Verbindung nach einem der Ansprüche 2 bis 7, **dadurch gekennzeichnet, dass** der Abdeckstreifen (7) wenigstens in seiner sich in Richtung des Stoßes (6) zwischen den einander benachbarten Schmalflächen (3, 4) der Teile (1, 2) erstreckenden Längsrichtung elastisch ist.

9. Verbindung nach einem der Ansprüche 2 bis 8, **dadurch gekennzeichnet, dass** die Teile (1, 2) aus gummielastischem Schaumkunststoff bestehen.

10. Verbindung nach einem der Ansprüche 2 bis 9, **dadurch gekennzeichnet, dass** die Teile (1, 2) aus wenigstens zwei Lagen unterschiedlicher Werkstoffe bestehen.

11. Verbindung nach Anspruch 10, **dadurch gekennzeichnet, dass** die Teile (1, 2) aus einer Grundlage (10) aus Vlies, einer Lage (11) aus wasserundurchlässigem und/oder atmungsaktivem Werkstoff und der Lage (12) aus Gewebe bestehen.

12. Verbindung nach Anspruch 11, **dadurch gekennzeichnet, dass** das Vlies ein Vlies aus Naturfasern, insbesondere Merinowolle, ist.

13. Verbindung nach Anspruch 11, **dadurch gekennzeichnet, dass** die Gewebelage (12) eine Gewebelage aus Kunstfasern ist.

14. Verbindung nach einem der Ansprüche 11 bis 13, **dadurch gekennzeichnet, dass** die aneinander grenzenden Schmalflächen (3, 4) der Teile (1, 2) nur im Bereich einer ihrer Lagen, insbesondere der Gewebelage (12), miteinander verbunden (5) sind.

15. Verbindung nach einem der Ansprüche 2 bis 14, **dadurch gekennzeichnet, dass** die Teile (1, 2) Zuschnitte für Bekleidungsstücke, insbesondere für Handschuhe, Schuhe oder Schutzhauben, sind.

16. Verbindung nach einem der Ansprüche 2 bis 15, **dadurch gekennzeichnet, dass** der Abdeckstreifen mit den Teilen (1, 2) durch einen Kleber (8) verbunden ist und dass der Kleber (8) ein durch Energiezufuhr, insbesondere Hitze oder Infrarot oder Ultraschall, aktivierbarer Kleber (8) ist.

## Claims

1. Method for making a connection for two flat parts (1, 2), wherein the flat parts (1, 2) are placed abutting against one another with at least one of their edge-side narrow surfaces (3, 4), wherein the parts (1, 2) comprise at least two layers and wherein one layer is a fabric layer (12), **characterised in that** the flat parts (1, 2) in the region of their narrow surfaces (3, 4) in which the parts (1, 2) adjoin one another are connected to one another (5) by gluing and that thereafter a cover strip (7) which covers the interconnected edges of the parts (1, 2) is applied to at least one large area (9) of the parts (1, 2) so that it rests thereon continuously and is adhesively bonded or welded to the fabric layer (12).

2. Connection for two flat parts (1, 2), which are placed abutting against one another with at least one of their edge-side narrow surfaces (3, 4), wherein the parts (1, 2) comprise at least two layers and wherein one layer is a fabric layer (12), and wherein the flat parts (1, 2) in the region of their narrow surfaces (3, 4) in which the parts (1, 2) adjoin one another are connected to one another (5) by an adhesive seam, **characterised in that** a cover strip (7) which covers the interconnected edges of the parts (1, 2) is applied to at least one large area (9) of the parts (1, 2) so that is rests thereon continuously and is adhesively bonded or welded to the fabric layer (12).

3. The connection according to claim 2, **characterised in that** the narrow surfaces (3, 4) of the parts (1, 2) are only connected to one another over one part of their surface extension.

4. The connection according to claim 3, **characterised in that** the narrow surfaces (3, 4) of the parts (1, 2) are connected to one another in several regions which are separated from one another and which are distributed over the length of the interconnected narrow surfaces (3, 4) of the parts (1, 2).

5. The connection according to claim 3 or 4, **characterised in that** the narrow surfaces (3, 4) of the parts (1, 2) are connected to one another in at least one region which extends only over a fraction of the height and the width of the narrow surfaces (3, 4).

6. The connection according to any one of claims 2 to 5, **characterised in that** the cover strip (7) is adhesively bonded (8) to the large surface (9) of the two parts (1, 2).

7. The connection according to any one of claims 2 to 5, **characterised in that** the cover strip (7) is welded to the large surface (9) of the two parts (1, 2).

8. The connection according to any one of claims 2 to 7, **characterised in that** the cover strip (7) is elastic at least in its longitudinal direction which extends in the direction of the joint (6) between the adjacent narrow surfaces (3, 4) of the parts (1, 2).

9. The connection according to any one of claims 2 to 8, **characterised in that** the parts (1, 2) consist of rubber-elastic foam plastic.

10. The connection according to any one of claims 2 to 9, **characterised in that** the parts (1, 2) consist of at least two layers of different materials.

11. The connection according to claim 10, **characterised in that** the parts (1, 2) consist of a base layer (10) of fleece, a layer (11) of water-impermeable and/or breathable material, and the layer (12) of fabric.

12. The connection according to claim 11, **characterised in that** the fleece is a fleece of natural fibres, in particular merino wool.

13. The connection according to claim 11, **characterised in that** the fabric layer (12) is a fabric layer of synthetic fibres.

14. The connection according to any one of claims 11 to 13, **characterised in that** the adjoining narrow surfaces (3, 4) of the parts (1, 2) are connected to one another (5) only in the region of one of their layers, in particular of the fabric layer (12).

15. The connection according to any one of claims 2 to 14, **characterised in that** the parts (1, 2) are cuttings for articles of clothing, in particular for gloves, shoes, or protective hoods.

16. The connection according to any one of claims 2 to 15, **characterised in that** the cover strip is connected to the parts (1, 2) by an adhesive (8) and that the adhesive (8) is an adhesive (8) which can be activated by energy supply, in particular heat or infrared or ultrasound.

## Revendications

1. Procédé d'établissement d'une connexion entre deux pièces plates (1, 2), les pièces plates (1, 2) sont disposées l'une contre l'autre bout à bout par au moins une de leurs surfaces latérales étroites (3, 4), les pièces (1, 2) présentant au moins deux épaisseurs et une épaisseur étant une épaisseur de textile (12), **caractérisé en ce que** les pièces plates (1, 2) sont connectées ensemble (5) par collage dans la zone de leurs surfaces étroites (3, 4) où les pièces (1, 2) sont contiguës et que, sur au moins une grande surface (9) des pièces (1, 2), en appui continu, une bande de recouvrement (7) recouvrant les bords connectés entre eux des pièces (1, 2) est ensuite appliquée et collée ou soudée à l'épaisseur de textile (12).

2. Connexion pour deux pièces plates (1, 2) reposant l'une contre l'autre bout à bout par au moins une de leurs surfaces latérales étroites (3, 4), ces pièces (1, 2) présentant au moins deux épaisseurs, une épaisseur étant une épaisseur de textile (12) et les pièces plates (1, 2) étant connectées entre elles (5) dans la zone de leurs surfaces étroites (3, 4) où les pièces (1, 2) sont contiguës par un cordon de colle, **caractérisée en ce que**, sur au moins une grande surface (9) des pièces (1, 2), en appui continu, une bande de recouvrement (7) recouvrant les bords connectés entre eux des pièces (1, 2) est appliquée et collée ou soudée à l'épaisseur de textile (12).

3. Connexion selon la revendication 2, **caractérisée en ce que** les surfaces étroites (3, 4) des pièces (1, 2) ne sont connectées ensemble que sur une partie de leur extension surfacique.

4. Connexion selon la revendication 3, **caractérisée en ce que** les surfaces étroites (3, 4) des pièces (1, 2) sont connectées ensemble dans plusieurs zones séparées les unes des autres et réparties sur la longueur des surfaces étroites (3, 4) connectées ensemble des pièces (1, 2).

5. Connexion selon la revendication 3 ou 4, **caractérisée en ce que** les surfaces étroites (3, 4) des pièces (1, 2) sont connectées ensemble dans au moins une zone qui s'étend seulement sur une fraction de la hauteur et de la largeur des surfaces étroites (3, 4).

6. Connexion selon une des revendications 2 à 5, **caractérisée en ce que** la bande de recouvrement (7) est collée (8) à la grande surface (9) des deux pièces (1, 2).

7. Connexion selon une des revendications 2 à 5, **caractérisée en ce que** la bande de recouvrement (7) est soudée à la grande surface (9) des deux pièces (1, 2).

8. Connexion selon une des revendications 2 à 7, **caractérisée en ce que** la bande de recouvrement (7) est élastique au moins dans son sens longitudinal s'étendant en direction de la butée (6) entre les surfaces étroites voisines (3, 4) des pièces (1, 2).

9. Connexion selon une des revendications 2 à 8, **caractérisée en ce que** les pièces (1, 2) sont composées de caoutchouc mousse synthétique.

10. Connexion selon une des revendications 2 à 9, **caractérisée en ce que** les pièces (1, 2) sont composées d'au moins deux épaisseurs de matériaux différents.

11. Connexion selon la revendication 10, **caractérisée en ce que** les pièces (1, 2) sont composées d'une base (10) en non-tissé, d'une épaisseur (11) de matériau imperméable à l'eau et/ou respirant et de l'épaisseur (12) de textile.

12. Connexion selon la revendication 11, **caractérisée en ce que** le non-tissé est un non-tissé à base de fibres naturelles, en particulier de laine mérinos.

13. Connexion selon la revendication 11, **caractérisée en ce que** l'épaisseur de textile (12) est une épaisseur de textile en fibres synthétiques.

14. Connexion selon une des revendications 11 à 13, **caractérisée en ce que** les surfaces étroites contiguës (3, 4) des pièces (1, 2) ne sont connectées entre elles (5) qu'au niveau d'une de leurs épaisseurs, en particulier de la couche de textile (12).

15. Connexion selon une des revendications 2 à 14, **caractérisée en ce que** les pièces (1, 2) sont des découpes pour des pièces d'habillement, en particulier pour des gants, des chaussures ou des bonnets de protection.

16. Connexion selon une des revendications 2 à 15, **caractérisée en ce que** la bande de recouvrement est connectée aux pièces (1, 2) par une colle (8) et que la colle (8) est une colle activable (8) par apport énergétique, en particulier chaleur ou infrarouges ou ultrasons.
